# EUROPEAN PATENT APPLICATION

(11) **EP 4 852 308 A1**
(43) Date of publication of application: **09.12.2026**
(21) Application number: 24920825.7
(22) Date of filing: 30.01.2024
(51) Int. Cl.: H02P 27/08, H02P 7/28, H02M 1/34

(54) **DRIVING DEVICE AND DRIVING METHOD**

(71) Applicant: Schaeffler Technologies AG & Co. KG, 91074 Herzogenaurach (DE)
(72) Inventor: HUANG, Rui, Shanghai 201804 (CN); XIE, Yiwen, Shanghai 201804 (CN)
(74) Representative: Schaeffler Technologies
(86) International application number: PCT/CN2024/074719
(87) International publication number: WO 2025/160750

(57) **Abstract**

Embodiments of the present application provide a drive device, the drive device comprising: three-phase bridge arms, each phase bridge arm comprising an upper switching transistor and a lower switching transistor connected in series, the source terminal of the upper switching transistor being connected to a power supply voltage terminal, the drain terminal of the lower switching transistor being connected to a ground terminal via a sampling resistor, the drain terminal of the upper switching transistor being connected to the source terminal of the lower switching transistor and used for connection to an electric motor, and the gate terminals of the upper switching transistor and the lower switching transistor being used for receiving control signals; wherein at least one first capacitor is further connected between the source terminal of the upper switching transistor and the drain terminal of the lower switching transistor.

## Description

### Technical Field

The present application relates to the field of circuit technology and, more specifically, to a drive device and a drive method.

### Background Art

An electric motor operates when driven by a drive device. At present, most commonly used drive devices use switching transistors (for example, metal-oxide-semiconductor (MOS) transistors) to control power on/off to the motor. For a motor drive device, disturbances usually arise from two parts. One part is interference originating from spikes generated by the repeated switching of the switching transistors; the electromagnetic interference (EMI) caused by these spike transients can affect normal motor operation. Another part of the interference comes from ripple and noise in the power supply.

### Summary

In one aspect, embodiments of the present application provide a drive device, comprising: three-phase bridge arms, each phase bridge arm comprising an upper switching transistor and a lower switching transistor connected in series, the source terminal of the upper switching transistor being connected to a power supply voltage terminal, the drain terminal of the lower switching transistor being connected to a ground terminal via a sampling resistor, the drain terminal of the upper switching transistor being connected to the source terminal of the lower switching transistor and used for connection to an electric motor, and the gate terminals of the upper switching transistor and the lower switching transistor being used for receiving control signals; wherein at least one first capacitor is further connected between the source terminal of the upper switching transistor and the drain terminal of the lower switching transistor.

In some implementations, at least one first capacitor comprises more than two capacitors.

In some implementations, the more than two capacitors are connected in series.

In some implementations, the more than two capacitors may be the same or different.

In some implementations, the drive device according to the embodiments of the present application further comprises: a second capacitor connected between the power supply voltage terminal and the ground terminal.

In some implementations, the second capacitor is an electrolytic capacitor or a supercapacitor.

In some implementations, the drive device according to the embodiments of the present application further comprises: a third capacitor connected between the power supply voltage terminal and the ground terminal.

In some implementations, the drive device according to the embodiments of the present application further comprises: a first resistor and a fourth capacitor connected in series between the source terminal and the drain terminal of the upper switching transistor.

In some implementations, the drive device according to the embodiments of the present application further comprises: a second resistor and a fifth capacitor connected in series between the source terminal and the drain terminal of the lower switching transistor.

In some implementations, the upper switching transistor and the lower switching transistor are metal-oxide-semiconductor transistors.

According to embodiments of the present application, by disposing a capacitor between the source terminal of the upper switching transistor and the drain terminal of the lower switching transistor, electromagnetic interference can be effectively reduced, thereby improving electromagnetic immunity (EMS) and mitigating noise interference.

### Brief Description of the Drawings

In order to make the technical solutions of the embodiments of the present application clearer, the drawings involved in the embodiments of the present application are briefly described below. For those of ordinary skill in the art, other drawings may also be obtained based on these drawings without creative work. In the drawings:
Fig. 1 illustrates a circuit diagram of a drive device according to an embodiment of the present application.
Fig. 2 illustrates a printed circuit board (PCB) arrangement of a drive device according to an embodiment of the present application.
Fig. 3 illustrates a PCB arrangement of a drive device according to an embodiment of the present application.
Fig. 4 illustrates an application schematic diagram of a drive device according to an embodiment of the present application.

### Detailed Description

Features and exemplary embodiments of various aspects of the present application will be described in detail below. To make the objectives, solutions, and advantages of the present application clearer, the following will further describe the details of the present application with reference to the drawings and specific embodiments. It should be understood that the specific embodiments described herein are only used to explain the present application and are not intended to limit the present application. For those skilled in the art, the present application may be implemented without some of these specific details. The embodiments described below are provided only to give a better understanding of the present application by illustrating examples thereof.

It should be noted that, herein, relational terms such as first, second, and third are used only to distinguish one entity or operation from another entity or operation, and do not necessarily require or imply any actual relationship or order between such entities or operations. In addition, the terms "comprise," "include," or any of their variants are intended to cover non-exclusive inclusion. A process, method, article, or device that comprises a plurality of elements encompasses not only those elements, but also other elements not explicitly listed, or additional elements inherent to such process, method, article, or device. Without further limitation, an element defined by the phrase "comprises ..." does not exclude the existence of other elements in the process, method, article, or device that comprises the element.

As described above, for a motor drive circuit device, one portion of interference arises from spikes generated by the repeated switching of switching transistors; the electromagnetic interference caused by such spike transients can affect normal motor operation. Another portion of the interference comes from ripple and noise in the power supply.

One existing solution sets a capacitor between the drain and source of each switching transistor in the drive device so that spikes generated when the switching transistor is rapidly turned off are absorbed by the capacitor, thereby reducing electromagnetic interference, and ensuring that the motor can operate normally when the switching transistor is rapidly turned off. However, this solution has very limited suppression effect on high-frequency interference generated by the power supply.

Another existing solution sets a capacitor between the positive terminal of the power supply voltage and ground in the drive device to absorb a hookback voltage generated by the motor, thereby preventing damage to a switching transistor that may be caused when the hookback voltage might exceed the endurance limit of the switching transistor in the lower bridge arm of the drive device. However, for many systems limited by factors such as spatial structure and PCB design, the loop area from the positive terminal of the power supply voltage to ground is too wide and the loop path is too long, so the capacitor cannot provide good absorption.

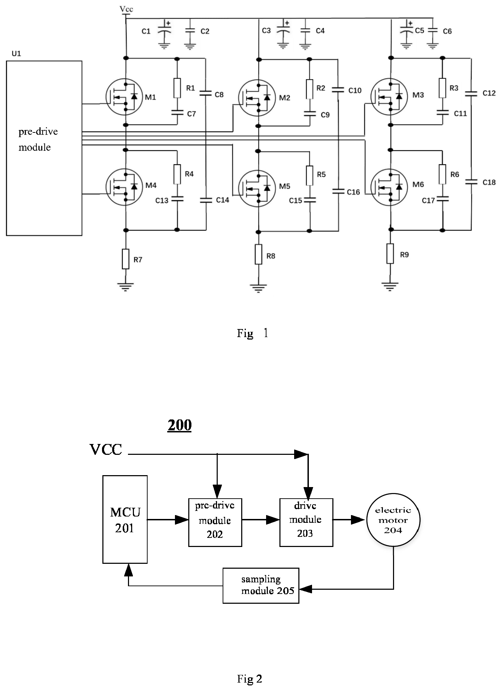

In view of the above, embodiments of the present application provide a drive device and a drive method that can effectively suppress high-frequency noise without increasing the loop area. The drive device and the drive method according to the embodiments of the present application will be described in detail below with reference to Figs. 1 to 4.

Fig. 1 shows a schematic circuit diagram of a drive device according to an embodiment of the present application. As shown in Fig. 1, a drive device 100 according to an embodiment of the present application comprises: three-phase bridge arms, each phase bridge arm comprising an upper switching transistor and a lower switching transistor connected in series, the source terminal of the upper switching transistor being connected to a power supply voltage terminal, the drain terminal of the lower switching transistor being connected to a ground terminal via a sampling resistor, the drain terminal of the upper switching transistor being connected to the source terminal of the lower switching transistor and used for connection to an electric motor, and the gate terminals of the upper switching transistor and the lower switching transistor being used for receiving control signals; wherein at least one first capacitor is further connected between the source terminal of the upper switching transistor and the drain terminal of the lower switching transistor.

More specifically, as shown in Fig. 1, a first phase bridge arm comprises an upper switching transistor M1 and a lower switching transistor M4 connected in series. The source terminal of the upper switching transistor M1 is connected to the power supply voltage terminal Vcc; the drain terminal of the lower switching transistor M4 is connected to the ground terminal GND through a sampling resistor R7; the drain terminal of the upper switching transistor M1 is connected to the source terminal of the lower switching transistor M4 and is used for connection to an electric motor (not shown in the figure); and the gate terminals of the upper switching transistor M1 and the lower switching transistor M4 are used for receiving control signals (for example, from a pre-driver module U1). At least one first capacitor (as shown, capacitors C8 and C14 connected in series) is further connected between the source terminal of the upper switching transistor M1 and the drain terminal of the lower switching transistor M4.

Similarly, a second phase bridge arm comprises an upper switching transistor M2 and a lower switching transistor M5 connected in series. The source terminal of the upper switching transistor M2 is connected to the power supply voltage terminal Vcc; the drain terminal of the lower switching transistor M5 is connected to the ground terminal GND through a sampling resistor R8; the drain terminal of the upper switching transistor M2 is connected to the source terminal of the lower switching transistor M5 and is used for connection to an electric motor (not shown in the figure); and the gate terminals of the upper switching transistor M2 and the lower switching transistor M5 are used for receiving control signals (for example, from the pre-driver module U1). At least one first capacitor (as shown, capacitors C10 and C16 connected in series) is further connected between the source terminal of the upper switching transistor M2 and the drain terminal of the lower switching transistor M5.

Similarly, a third phase bridge arm comprises an upper switching transistor M3 and a lower switching transistor M6 connected in series. The source terminal of the upper switching transistor M3 is connected to the power supply voltage terminal Vcc; the drain terminal of the lower switching transistor M6 is connected to the ground terminal GND through a sampling resistor R9; the drain terminal of the upper switching transistor M3 is connected to the source terminal of the lower switching transistor M6 and is used for connection to an electric motor (not shown in the figure); and the gate terminals of the upper switching transistor M3 and the lower switching transistor M6 are used for receiving control signals (for example, from the pre-driver module U1). At least one first capacitor (as shown, capacitors C12 and C18 connected in series) is further connected between the source terminal of the upper switching transistor M3 and the drain terminal of the lower switching transistor M6.

It should be understood that, for each phase bridge arm, the number of first capacitors is not limited to the two capacitors shown in the figure and may be more or fewer. It should also be understood that using multiple first capacitors can reduce failures caused by short circuits of a single capacitor and increase system reliability and stability. However, the at least one first capacitor of the present application is not limited to the serial connection shown in the figure; for example, a parallel connection may also be adopted. The capacitors in the at least one first capacitor may be the same or different. The impedance values of the sampling resistors R7, R8, and R9 are generally small, for example, less than 5 mΩ.

In some implementations, for each phase bridge arm, the drive device 100 further comprises: a second capacitor connected between the power supply voltage terminal and the ground terminal.

Specifically, as shown in Fig. 1, for the first phase bridge arm, the drive device 100 further comprises a second capacitor C1 connected between the power supply voltage terminal Vcc and the ground terminal GND. For the second phase bridge arm, the drive device 100 further comprises a second capacitor C3 connected between the power supply voltage terminal Vcc and the ground terminal GND. For the third phase bridge arm, the drive device 100 further comprises a second capacitor C5 connected between the power supply voltage terminal Vcc and the ground terminal GND.

In some implementations, the second capacitors C1, C3, and C5 of the respective phase bridge arms may be electrolytic capacitors (as shown in Fig. 1) or supercapacitors. The second capacitors C1, C3, and C5 are used for storing energy; when the drive circuit exhibits a transient high power consumption, they can temporarily store and release electrical energy to stabilize the power supply voltage and improve voltage stability.

In some implementations, for each phase bridge arm, the drive device 100 further comprises: a third capacitor connected between the power supply voltage terminal and the ground terminal.

Specifically, as shown in Fig. 1, for the first phase bridge arm, the drive device 100 further comprises a third capacitor C2 connected between the power supply voltage terminal Vcc and the ground terminal GND. For the second phase bridge arm, the drive device 100 further comprises a third capacitor C4 connected between the power supply voltage terminal Vcc and the ground terminal GND. For the third phase bridge arm, the drive device 100 further comprises a third capacitor C6 connected between the power supply voltage terminal Vcc and the ground terminal GND.

In some implementations, for each phase bridge arm, the drive device 100 further comprises: a first resistor and a fourth capacitor connected in series between the source terminal and the drain terminal of the upper switching transistor.

Specifically, as shown in Fig. 1, for the first phase bridge arm, the drive device 100 further comprises a first resistor R1 and a fourth capacitor C7 connected in series between the source terminal and the drain terminal of the upper switching transistor M1.

The first resistor R1 and the fourth capacitor C7 serve as a snubber circuit for the upper switching transistor M1. For the second phase bridge arm, the drive device 100 further comprises a first resistor R2 and a fourth capacitor C9 connected in series between the source terminal and the drain terminal of the upper switching transistor M2. The first resistor R2 and the fourth capacitor C9 serve as a snubber circuit for the upper switching transistor M2. For the third phase bridge arm, the drive device 100 further comprises a first resistor R3 and a fourth capacitor C11 connected in series between the source terminal and the drain terminal of the upper switching transistor M3. The first resistor R3 and the fourth capacitor C11 serve as a snubber circuit for the upper switching transistor M3.

In some implementations, for each phase bridge arm, the drive device 100 further comprises: a second resistor and a fifth capacitor connected in series between the source terminal and the drain terminal of the lower switching transistor.

Specifically, as shown in Fig. 1, for the first phase bridge arm, the drive device 100 further comprises a second resistor R4 and a fifth capacitor C13 connected in series between the source terminal and the drain terminal of the lower switching transistor M4. The second resistor R4 and the fifth capacitor C13 serve as a snubber circuit for the lower switching transistor M4. For the second phase bridge arm, the drive device 100 further comprises a second resistor R5 and a fifth capacitor C15 connected in series between the source terminal and the drain terminal of the lower switching transistor M5. The second resistor R5 and the fifth capacitor C15 serve as a snubber circuit for the lower switching transistor M5. For the third phase bridge arm, the drive device 100 further comprises a second resistor R6 and a fifth capacitor C17 connected in series between the source terminal and the drain terminal of the lower switching transistor M6. The second resistor R6 and the fifth capacitor C17 serve as a snubber circuit for the lower switching transistor M6.

The snubber circuit of the switching transistor M1 can absorb current and spike voltage stored in inductive and capacitive elements, so as to reduce spike voltages generated at the moments of turn-on and turn-off of the switching transistor M1. For the switching transistor M1, by adjusting the first resistor R1 and the fourth capacitor C7, oscillation (ringing) and hookback voltage generated between the source terminal and the drain terminal of the switching transistor M1 can be absorbed. For the other switching transistors M2, M3, M4, M5, and M6, their respective snubber circuits have similar effects and will not be described in detail here.

It should be understood that, for each phase bridge arm, the second capacitor, the third capacitor, and the fourth capacitor may be the same or different. The second capacitor, the third capacitor, and the fourth capacitor may also be the same or different among the phase bridge arms. The first resistor may also be the same or different among the phase bridge arms.

In some implementations, for each phase bridge arm, the upper switching transistors M1, M2, M3 and the lower switching transistors M4, M5, M6 may be metal-oxide-semiconductor (MOS) transistors.

According to embodiments of the present application, by setting a capacitor between the source terminal of the upper switching transistor and the drain terminal of the lower switching transistor, the electromagnetic interference caused by frequent switching of the switching transistors can be effectively reduced, thereby improving electromagnetic immunity (EMS), and ripple and noise of the power supply can also be absorbed. In addition, by adding bypass capacitors between the power supply voltage terminal and the ground terminal, ripple and noise of the power supply can be further absorbed.

The drive device according to embodiments of the present application can be applied to systems that require a drive module, for example but not limited to, an electric power steering system of a vehicle.

Fig. 2 shows an application schematic diagram of a drive device according to an embodiment of the present application. As shown in Fig. 2, in this application, the drive device according to the embodiments of the present application is used as the drive module 203 shown in the figure. In this application, the vehicle microcontroller unit (MCU) 201 sends control signals to the pre-driver module 202. The pre-driver module 202 generates pre-driver signals, based on the control signals sent by the MCU 201, for turning on or off the switching transistors of the respective phase bridge arms of the drive module 203, and then the drive module 203 generates drive signals by turning on or off the switching transistors of the respective phase bridge arms to drive the electric motor 204 to operate. A sampling module 205 samples voltage or current signals of the electric motor 204 and feeds them back to the MCU 201, and the MCU 201 then generates appropriate control signals.

The drive circuit (including the portion of the three-phase bridge arms) is typically integrated on a printed circuit board (PCB). In a specific PCB design, due to characteristics of the drive circuit, all the elements of the drive circuit need to be arranged collectively. The drive circuit generates a large amount of heat; therefore, generally no other components can be arranged on the back side of the PCB, which is used only for heat dissipation to improve the stability and reliability of the circuit.

The pre-driver signals sent by the pre-driver module 202 are generally pulse-width modulation (PWM) waves, which carry rich high-frequency components at the rising edges of the PWM waves. Due to the influence of component and PCB spatial structures, these high-frequency components cannot be absorbed through PCB design.

In the drive device according to embodiments of the present application, on the one hand, capacitors C1, C2, C3, C4, C5, and C6 are placed at the power supply voltage terminal. Because capacitors have the characteristic of "passing high frequency and blocking low frequency," these capacitors provide a low-impedance return path for high-frequency noise, enabling high-frequency noise to return quickly to the ground terminal, thereby reducing interference noise flowing into the loop and improving the system's electromagnetic immunity (EMS). In practice, the second capacitors C1, C3, and C5 have a strong suppression effect on motor ripple noise, but their ability to suppress high-frequency noise of the power supply is limited; therefore, they are used in combination with the third capacitors C2, C4, and C6.

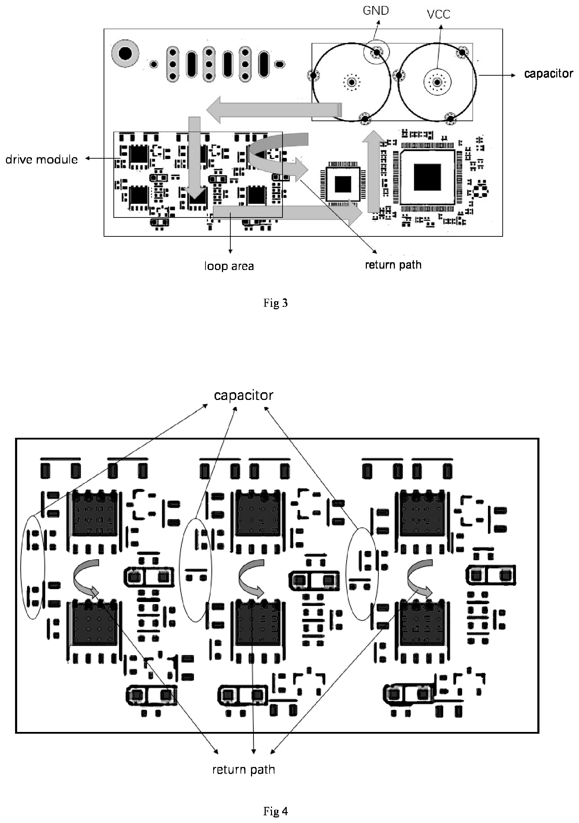

Fig. 3 shows a PCB arrangement of a drive device according to an embodiment of the present application. As shown in Fig. 3, the drive circuit is arranged in the lower-left portion of the PCB. The capacitors C1, C3, and C5 are generally larger in size, and their placement on the PCB is greatly affected by the PCB spatial structure; therefore, together with capacitors C2, C4, and C6, they are arranged in the upper-right portion of the PCB, which is relatively far from the drive circuit. The sampling resistors R7, R8, and R9 may be packaged, for example, as 2512 or 3920, and are arranged on the back side of the PCB. In the figure, the pre-driver module and the MCU are arranged in the lower-right portion of the PCB, and some connector components or other elements can be arranged in the upper-left portion.

As shown in Fig. 3, for capacitors C1, C2, C3, C4, C5, and C6, the loop area from the power supply voltage terminal Vcc to the ground terminal GND is relatively large, and the return path is relatively long, so these capacitors cannot provide good absorption of high-frequency noise introduced by the frequent switching of switching transistors.

Therefore, on the other hand, the drive device according to embodiments of the present application adds first-capacitor low-pass filters C8, C14, C10, C16, C12, and C18 to provide a low-impedance leakage path for high-frequency noise, so that high-frequency noise and higher-order harmonics can be leaked earlier to the system ground terminal, thereby reducing interference flowing into the system, effectively suppressing interference noise, and improving the EMS performance of the system.

More specifically, according to electromagnetic theory, there is the following formula Imagewhere E represents the electric field intensity, S represents the loop area, I represents current, f represents the frequency of the pre-driver signal, and D represents the distance between loops. In general, after the PCB design is determined, I, f, and D are constant. Therefore, the larger the loop area S is, the greater the space radiation electric field intensity E becomes. Accordingly, by reducing the loop area S, space radiation can be reduced and the propagation path of noise can be shortened.

Fig. 4 shows a PCB arrangement of a drive device according to an embodiment of the present application. The arrangement of the drive circuit portion is shown in particular in Fig. 4. As can be seen from the figure, the capacitors C8, C14, C10, C16, C12, and C18 are arranged near the switching transistors, and both the return path and the loop area are reduced, thereby achieving good absorption of high-frequency noise.

Therefore, according to embodiments of the present application, by adding the capacitors C8, C14, C10, C16, C12, and C18 between the source terminal of the upper switching transistor and the drain terminal of the lower switching transistor, an AC leakage circuit for high-frequency noise is provided, which suppresses high-frequency noise, improves EMS performance, and reduces the loop area and the return path, thereby reducing space radiation and mitigating noise interference.

The above disclosure is only some specific embodiments of the present application, and the present application is not limited to the specific structures described above and shown in the drawings. Those skilled in the art can understand that the protection scope of the present application is not limited thereto, and various equivalent modifications or substitutions may be conceived within the technical scope disclosed in the present application, and all such equivalent modifications or substitutions are included within the protection scope of the present application.

### Reference numeral list

- 100: drive device
- 201: microcontroller unit (MCU)
- 202: pre-driver module
- 203: drive module
- 204: electric motor
- 205: sampling module
- Vcc: power supply voltage terminal
- GND: ground terminal
- U1: pre-driver module
- M1, M2, M3: upper switching transistor
- M4, M5, M6: lower switching transistor
- R1, R2, R3: first resistor
- R4, R5, R6: second resistor
- R7, R8, R9: sampling resistor
- C1, C3, C5: second capacitor
- C2, C4, C6: third capacitor
- C7, C9, C11: fourth capacitor
- C8, C10, C12, C14, C16, C18: first capacitor
- C13, C15, C17: fifth capacitor

## Claims

1. A drive device, comprising:
three-phase bridge arms, each phase bridge arm comprising an upper switching transistor and a lower switching transistor connected in series,
the source terminal of the upper switching transistor being connected to a power supply voltage terminal,
the drain terminal of the lower switching transistor being connected to a ground terminal via a sampling resistor,
the drain terminal of the upper switching transistor being connected to the source terminal of the lower switching transistor and used for connection to an electric motor, and the gate terminals of the upper switching transistor and the lower switching transistor being used for receiving control signals;
wherein at least one first capacitor is further connected between the source terminal of the upper switching transistor and the drain terminal of the lower switching transistor.

2. The drive device according to claim 1, wherein at least one first capacitor comprises more than two capacitors.

3. The drive device according to claim 2, wherein the more than two capacitors are connected in series.

4. The drive device according to claim 3, wherein the more than two capacitors may be the same or different.

5. The drive device according to claim 1, further comprising: a second capacitor connected between the power supply voltage terminal and the ground terminal.

6. The drive device according to claim 5, wherein the second capacitor is an electrolytic capacitor or a supercapacitor.

7. The drive device according to claim 5, further comprising: a third capacitor connected between the power supply voltage terminal and the ground terminal.

8. The drive device according to claim 1, further comprising: a first resistor and a fourth capacitor connected in series between the source terminal and the drain terminal of the upper switching transistor.

9. The drive device according to claim 8, further comprising: a second resistor and a fifth capacitor connected in series between the source terminal and the drain terminal of the lower switching transistor.

10. The drive device according to claim 1, wherein the upper switching transistor and the lower switching transistor are metal-oxide-semiconductor transistors.
